# EUROPEAN PATENT APPLICATION

(11) **EP 1 315 396 A1**
(43) Date of publication of application: **28.05.2003**
(21) Application number: 01402998.7
(22) Date of filing: 22.11.2001
(51) Int. Cl.: H04Q 11/04

(54) **Method to assign upstream timeslots to a network terminal in a TDMA network comprising a headend station**

(71) Applicant: ALCATEL, 75008 Paris (FR)
(72) Inventor: Ringoot, Edwin Augustus Philomena, 4564 CW St. Jansteen (NL); Gyselings, Tim, 2100 Deurne (BE)
(74) Representative: Narmon, Gisèle Marie Thérèse

(57) **Abstract**

The invention relates to a timeslot management method for use in a time division multiple access network. The access network comprises a central station (CS) coupled to a plurality of network terminals (ONU1, ..., ONUi, ..., ONUn) via the cascade connection of a common transmission link (L) and respective individual network terminal links (L1,...,Li,...,Ln). The management method comprises the steps of:
- enabling the network terminals (ONU1, ..., ONUi, ..., ONUn) to transmit upstream data packets to the central station (CS) in a time multiplexed way over the common transmission link (L) by using upstream time slots which are assigned to the network terminals by means of distribution of a downstream bitstream (BSG) of grants (G1, G2, G3, G4, G5, ...); and
- classifying within the network terminals (ONU1, ..., ONUi, ..., ONUn) the upstream data packets in accordance to associated service categories; and
- comprising in one (G3) of the grants which is intended for one of the network terminals (ONUi), a plurality of queue identities (Q1,...,Qj,..., Qm) which are associated to a service category (S1, ..., Sj, ..., Sm) within the network terminal (ONUi) and thereby enabling the network terminal (ONUi), upon detection of a queue identity (Qj) to transfer an amount of upstream data packets from its corresponding service category (Sj). The method further comprises, defining a network terminal identity (NTi) that is associated to the network terminal (ONU) and defining the queue identities (Q1, ..., Qj, ..., Qm) with identifiers that are distinguished from the network terminal identity (NTi).

## Description

The present invention relates to a method to assign upstream timeslots to a network terminal, as defined in the preamble of claim 1, a network terminal adapted to perform this method, as defined in the preamble of claim 5, and a central station adapted to perform this method, as defined in the preamble of claim 7, and a time division multiple access network as defined in the preamble of claim 9.

Such a method, network terminal and central station are already known in the art, e.g. from *the European paten application 'Method to assign upstream timeslots to a network terminal, and network terminal and medium* access controller for performing such a method", published at 17 November, 1999 with publication number 0957654. Therein, a time slot management system is described, being part of a communication system including a main station coupled to each of a plurality of substations or user stations in a point-to-multi-point way, via the cascade connection of a common transmission link and an individual user link. The prior art time slot management system is used in a time division multiple access network and comprises a central station that is coupled to each of a plurality of network terminals via the cascade connection of a common transmission link and respective individual network terminal links. In order to manage the time division multiple access, the central station distributes a downstream bitstream of grants. Hereby the central station assigns upstream time slots to the network terminals. These upstream time slots are used by the network terminals to transmit upstream data packets to the central station.

The prior art time division multiple access network creates a differentiation among different service categories pertaining to different packet or bitstreams the network terminals want to transfer upstream to the central station. Such a service category is e.g. a service category for which only a fixed cell rate is specified, for instance the constant bit rate category as specified by the ATM Forum specification AF-TM-0056.000 dated April 1996 in case the bitstreams consist of ATM streams. Another service category is e.g. the "best effort" service category whereby a network terminal intends to send packets pertaining to an unspecified bit rate service category, described in the same ATM Forum specification, whereby a maximum peak cell rate equivalent bandwidth during a certain time period is reserved, while the packets are only to be transferred at irregular instances in short bursts.

In order to support the different service categories the prior art method comprises a step of classifying the upstream data packets within the network terminals in accordance to associated service categories. Furthermore, a grant being intended for one of the network terminals will comprise a plurality of queue identities, which are each, associated to such a service category within the network terminal. Hereby the network terminal is enabled to transfer, upon detection of one of the queue identities, a predetermined amount of upstream data packets from its corresponding service category.

The presently known methods to assign an upstream timeslot in an optical network are complying with the known standard of ITU-T Telecommunication Standardisation Sector of ITU - Series G: Transmission Systems and media, digital systems and networks - Broadband optical access systems based on Passive Optical Networks (PON) - ITU-T Recommendation G.983.1. Therein it is described that upstream bandwidth is allocated by using 8-bit grant codes that are sent downstream in downstream Physical Layer Operation and Maintenance cells PLOAM cells. These 8-bit grant codes specify the network terminator of which upstream data packets are to be sent with a granularity of 1 upstream timeslot at a time. Taking into account other functionality's that also has to be addressed by these 8-bit grant codes, 253 possible codes remain. These grant codes are used to allow upstream transmission of upstream PLOAM cells i.e. one 1 per network terminal, divided slot grants i.e. one per several network terminals, and upstream data grants i.e. at least 1 per network terminal.

Originally every network terminal used only one data grant for each network terminator. At page 32 - *Table 10*/*G.983.1 - specification of the* grants - *of version 10*/*1998* it is described that the 8-bit value of a data grant is assigned to an optical network unit during the ranging protocol by using the grant allocation message. In this way the optical network unit can send an upstream data packet or an idle cell in the event if no data packet is available. *One page further, at page 33 - Table 10*/*G.983.1 - specification of the grants - of version 10*/*1998* it is described that so called, reserved grants, can be used in a future version of the Recommendation e.g. in order to address a specific optical network.

However, now that access networks with the dynamic bandwidth allocation of the upstream bandwidth are promoted and being standardised in future versions of the above mentioned Recommendation, multiple data grants per network terminator are used. This allows the central office to control which service class e.g. continuous bit rate, or unspecified bit rate, ... in the network terminal is allowed to send an upstream data packet. Such an access network is described in e.g. the article 'Dynamic Bandwidht allocation in Passive Optical Networks' by Michel Tassent, Edwin Ringoot, Tim Gyselings, Nico Janssens and Peter Vetter, published at the 26-29 June, 2001 NOC 2001 - Networks and Optical Communication - Conference (Edited by A. Lord, D.W. Faulkner and D.W. Smith). This article describes extended functionality for the broadband optical access systems defined in ITU-T Recommendation G.983.1. This article investigates the efficiency and Quality of Service QoS improvements that can be obtained by the introduction of Dynamic Bandwidth allocation DBA compared to static bandwidth allocation in an ATM based Passive Optical access Network APON. The Dynamic Bandwidth Allocation DBA demonstrator allows the implementation of downstream grants per Optical Network Termination or subdivided per Traffic container class, shortly called T-Cont.

The traffic containers T-Cont's are used for the management of upstream bandwidth allocation in the section of the Transmission Convergence layer. It is in these traffic containers within the network terminators that the upstream data packets are classified in accordance to associated service categories.

A known implementation in such networks, supporting different service categories, is that one data grant is associated to one traffic container. *This is also described on page 134, paragraph 4 of the above-mentioned article.* Herein, it is explained that,in the event that the coloured grant option is activated i.e. the mode wherein the grants are carrying an identification of the T-CONT's in order to allow upstream transmission of upstream data-packets by the respective T-CONT's, an assignment of one grants per T-CONT type is made. According to this implementation and in line with the above mentioned standard, a first data grant of 8 bits might be allocated to a network terminal and furthermore additional 8 bit data grants might be associated to the traffic containers T-CONT's i.e. service categories within the network terminal in order to allow transmission of upstream data packets in a predefined upstream timeslot.

This means that when such an 8-bit grant is allocated to a service category within a network terminal, the grant comprises one queue identity of 8 bits that identifies the associated service category. This queue identity of 8 bits uniquely identifies the service category independently of the fact that this service category is comprised within the one or another network terminal.

A disadvantage of such an allocation of 8-bit grants to each traffic container within the different network terminals is that, if many network terminals are connected in the tree-like network, only a limited number of upstream data grants per network terminal is allowed due the limited number of combinations of the 8 bits for definition of an 8 bit grant. Hereby, the number of predefined service classes is limited.

Indeed, for an access network with e.g. 32 network terminals, only a number of approximately 200 combinations remain available for data grants. This means that only approximately 6 different data grants per network terminal can be allocated to its traffic containers i.e. service categories. Operators would like to deploy time division multiple access networks with a much higher amount of service categories per network terminal.

An object of the present invention is to provide a method, a network terminal, and a central office of the above known type, which supports differentiating amongst different types of service categories within a network terminal but which allows a higher number of service categories per network terminal and which aims a more efficient use of the bits in the downstream bitstream of grants.

According to the invention, this object is achieved due to the fact that said method is further adapted as is described in the characteristic part of the first claim, that said network terminal is further adapted as described in the characteristic part of claim 5, that said central station is further adapted as described in the characteristic part of claim 7 and that said time division multiple access network is further adapted as described in the characteristic part of claim 9.

Indeed, by defining a network terminal identity that is associated to the network terminal, and by also comprising the network terminal identity in the grant, the bits of the downstream bitstream of grants can be used more efficiently i.e. specifying only once a network terminal identity for a plurality of queue identities. Moreover, since the queue identities in the grant are defined with local identifiers, which only have a local meaning whereby one of the plurality of service categories is only uniquely identified by combining a queue identity with the network terminal identity, a higher number of service categories per network terminal can be obtained i.e. the available combinations of the number of bits to define a queue identity in order to identify one of a plurality of service categories within a specific network terminal can be re-used to define a queue identity in order to identify one of a plurality of service categories within another network terminal, as long as the combination of the other network terminal identity with the queue identity is different from the combination of the first network terminal identity with the queue identity.

It has to be explained that the term 'local identifier' means that the queue identifier only has a meaning when used in combination with the network terminal identifier. However, this does not mean that the 'local identifier' doesn't have a meaning at the central station. Indeed, when e.g. according to the dynamic bandwidth allocation a particular service category of a particular network terminal is entitled to receive a grant, the central station, makes the relevant associations in order to retrieve the required identifications for the particular service category i.e. the relevant 'local identifier' and the relevant network identifier. The central office makes the combination and distributes this combination to the network terminals i.e. the combination is the fact that the queue identifier and a network identifier, are to be included in the same grant. Finally, this combination is used by the network terminals. Indeed, the network terminal detects its own identity in a particular grant and finds furthermore a queue identity in this same grant knows that he is allowed to use this queue identity in order to determine the associated service category. The network terminal uses the combination of the detected information i.e. its own identity and a queue identity that only has a local meaning.

Furthermore, by defining in the grant a first field and a second field and by comprising, by the central station, the network terminal identity in the first field and the plurality of queue identities in the second field; and by determining, by said network terminal, upon detection of its network terminal identity in the first field, an assignment of a predefined number of consecutive upstream timeslots to the network terminal; and furthermore by transferring, by the network terminal, upon detection of one of the plurality of queue identities in the second field the predetermined amount of upstream data packets from its associated service category in one of the predefined number of consecutive timeslots, the method to assign upstream timeslots anticipates on know-how that upstream traffic is allocated to network terminals in multiples of e.g. N cells, allowing a specification of the network terminal identifier only once per N grants. This is described in claim 2.

A preferred implementation is described in claim 3. Indeed, herein the time division multiple access network is an optical network and the timeslot management method further comprises a step of comprising the downstream bitstream of grants in downstream physical layer operation and maintenance cells shortly called PLOAM-cells which are distributed into the network anyway. This means that the available bits in the downstream PLOAM can be reused in a different way. Indeed, in stead of assigning 8-bit grants to either a network terminal or to either a service category within a network terminal, a grant that comprises one network terminal identifier and a plurality of queue identities is defined. The network terminal identifier determines the fact that a number of N consecutive timeslots is assigned to that network terminal. Each queue identity of the plurality of queue identities is a permission to transmit upstream data packets from its corresponding service category in one of the number of N consecutive timeslots.

A preferred embodiment is described in claim 4. Herein the timeslot management method comprises a step of defining the first field eight bits long and including in the second field four queue identities (Q1, Q2, Q3, Q4) of six bits long whereby the predefined number of consecutive upstream timeslots is equal to four. In this way the bits of four 8-bit grants according to the known previous implementation in a PLOAM cell are reused in a different way. Indeed, in the new grant, the terminal identifier is specified only once by means of 1 byte and is permission for the use of N upstream timeslots. Furthermore, N times a {((N*8)-8) / N}-bit field is left to specify the service category i.e. traffic container for that network terminal. In the event when N equals to four, four 6-bit queue identifiers are comprised in the new grant, each allowing a transfer of a predetermined amount of upstream data packets in one of the four upstream timeslots.

Indeed, by predefining at the central station and at the network terminators that upstream traffic is allocated to the network terminators in a multiple of N upstream timeslots and allowing thereby an identification of the network identifier of only once per N downstream grants. The remaining bits ((N*8)-8) of the original N grants are used to identify N times a service categorie of the network terminal in order to fill the N consecutive upstream timeslots. A maximum of (((N*8)-8) / N ) bits is used to identify a service class with {(((N*8)-8) / N )}² possible combinations whereof only a few have to be remained for other functionality's. With e.g. N=4 a service class is identified by means of (((N*8)-8) / N ) = 6 bits which provides 64 new combinations whereof a few have to be used for other functionality's. In this way, the present invention allows a higher number of service categories per network terminal i.e. up to 64 T-CONTs or service categories per NT. It has to be remarked here that some numbers are reserved for other purposes whereby the theoretical quantity of 64 will not be reached. These other purposes are e.g. permission to transmit an upstream PLOAM or permission to transmit an upstream Divided Mini-slot. Hereby, are the reserved values for these kind of permissions comprised in the grant according to e.g. a similar way as the permissions to transmit upstream data packets.

For higher bit rate versions of passive optical networks PON of the G.983 standard, it is proposed to concatenate upstream cells per multiple N=4. This knowledge allows reusing the grant byte positions in the downstream PLOAM cell in a different way to increase support for more network terminals on the PON and more data grants per NT without a significant change of the PLOAM format. The introduced concept of the present invention specifies per 4 upstream timeslots which network terminal is entitled to send upstream data packets and which service category is supposed to provide these data packets for each of the four upstream slot positions. Note that the new format of the new grants also continues support for other grant functionality like ranging, unassigned, idle and the former divided slot grants. The first information field of a new grant comprises the network terminal identifier that is addressed, or specifies a ranging or idle grant. The remaining 4 fields specify the service categories that provide the data information.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawing wherein :
Figure 1 represents a scheme of a communications network wherein the present invention is applied; and
Figure 2 represents the content of a downstream PLOAM cell according to prior art; and
Figure 3 represents the content of a downstream PLOAM according to a preferred implementation of the present invention; and
Figure 4 represent the content of a 4 byte grant according to a preferred embodiment of the present invention.

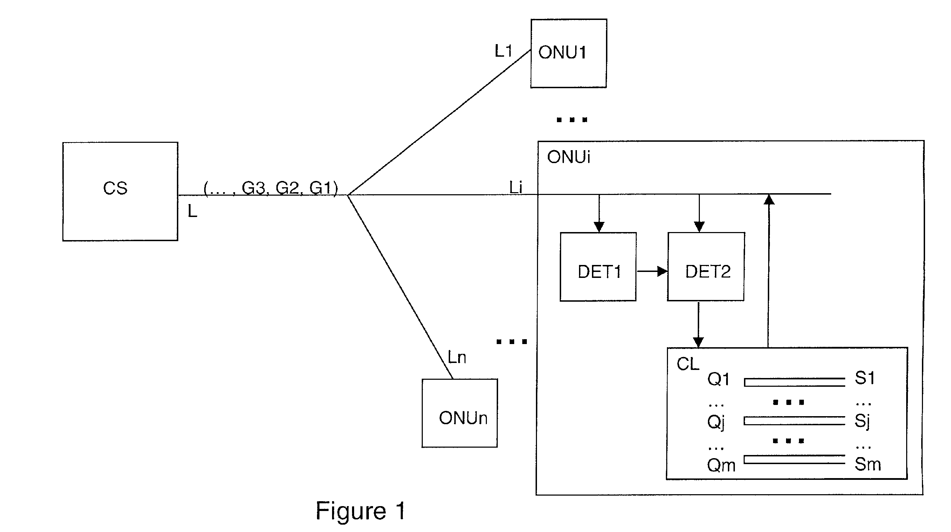

The communications network of Figure 1 is composed of a central station CS and network terminals ONU1, ..., ONUi, ... to ONUn. The central station is coupled to these optical network units via the cascade connection of a common transmission link L, for instance an optical fibre link, and respective individual network terminal links L1,...,Li,...,Ln, also for instance consisting of optical fibres . The network hence has a point-to-multipoint architecture in the downstream direction, which is the direction from the central station CS to the network terminals ONU1 to ONUn, and a multipoint-to-point architecture in the upstream direction, i.e. the direction from the network terminals ONU1 to ONUn towards the central station CS.

In the downstream direction, the central station CS broadcasts information to all network terminals ONU1 to ONUn. The information is empacked in so-called downstream frames. In the opposite direction, the network terminals ONU1 to ONUn commonly share the link L in a time-multiplexed way. This means that different network terminals transmit information to the central station CS in different timeslots. Each network terminal thus sends upstream information in short bursts to the central station. The upstream timeslots constitute so-called upstream frames.

To be allowed to send a burst in an upstream timeslot, a network terminal, for instance ONUi, has to receive a permission or grant from a medium access controller MAC (not shown), usually included within the central station CS.

At regular time intervals such permissions are downstream broadcasted by the medium access controller by means of a so-called PLOAM (Physical Layer Operation And Maintenance) cell wherein the contents of grant fields precisely define which network terminal is allowed to occupy which upstream timeslot.

In a multi-service network, network terminals are adapted to transmit several bitstreams, pertaining to several connections. In case of ATM bitstreams, pertaining to different ATM connections, these are associated with a set of traffic and connection parameters, related to the ATM service category associated with the connection, and which parameters are declared to the network by the user connected to the network terminal, during the connection-set-up, by means of signalling parameters. These traffic and connection parameters are for instance a peak cell rate, abbreviated with PCR, a minimum cell rate, abbreviated with MCR, a sustainable cell rate, abbreviated with SCR, etc. These parameters are standardised by the ATM Forum by specification AF-TM-0056.000 dated April 1996.

A network terminal, such as ONUi of Figure 1, adapted to transmit several bitstreams associated to several service categories, therefore includes for each service category one associated storage queue, in which subsequent cells or packets of the bitstreams associated with this service category, are stored. Thus in case four service categories are supported by this network terminal, four respective storage queues are included. These service categories may for instance comprise the constant bit rate, abbreviated with CBR, the variable bit rate, abbreviated with VBR, the available bit rate, abbreviated with ABR and the unspecified bit rate, abbreviated with UBR, service categories, again specified by the mentioned ATM forum specification.

I has to be remarked here that different service queues within a same network terminal might be associated to a same kind of service category but e.g. serving different connections with different kinds of QoS contracts.

These storage queues included within network terminal ONUi are schematically depicted in Figure 1 with Q1, ..., Qj, to Qm, for the general case of m service categories. In order to classify incoming data packets from one incoming bitstream, the network terminal ONUi includes a classifier CL adapted to classify incoming data packets from bitstreams, in accordance to their associated service category S1, ..., Sj, ..., Sm. It has to be remarked that, in order not to overload the Figure 1, the inputs via which the classifier CL is receiving the different incoming bitstreams, are not shown. This is also going beyond the aim of the present invention. The aims is the fact that the classifier CL classifies incoming data packets in accordance to associated service categories S1, ..., Sj, ..., Sm which are then succeeding packets of which are stored in the respective associated storage queues Q1 to Qm.

For ATM networks, examining the header of each ATM cell or packet may perform the sorting. This header information includes the VPI/VCI identifier, which is during connection set-up uniquely linked to a particular service category. The classifier CL is then adapted to extract this header information, compare this to connection set-up information previously captured and stored during the connection set-up phase, and to accordingly determine the associated service category of the available service categories Si, ..., Sj, ..., Sm. Since a person skilled in the art further knows such classifier CL, these will not be further described within this document.

According to the prior art, a grant transmitted to a network terminal needs to include the network terminal identifier e.g. NTi in order to allow upstream transmission of a number of upstream data packets in an upstream timeslot. However, for multi-service networks, it is clear that the grants transmitted to each network terminal, now not only have to include an identifier for the network terminal itself, but also an identifier concerning the service category of the bitstream for which transmission is allowed. Since per service category one storage queue is associated, the service category identifier thus also corresponds to the storage queue identifier.

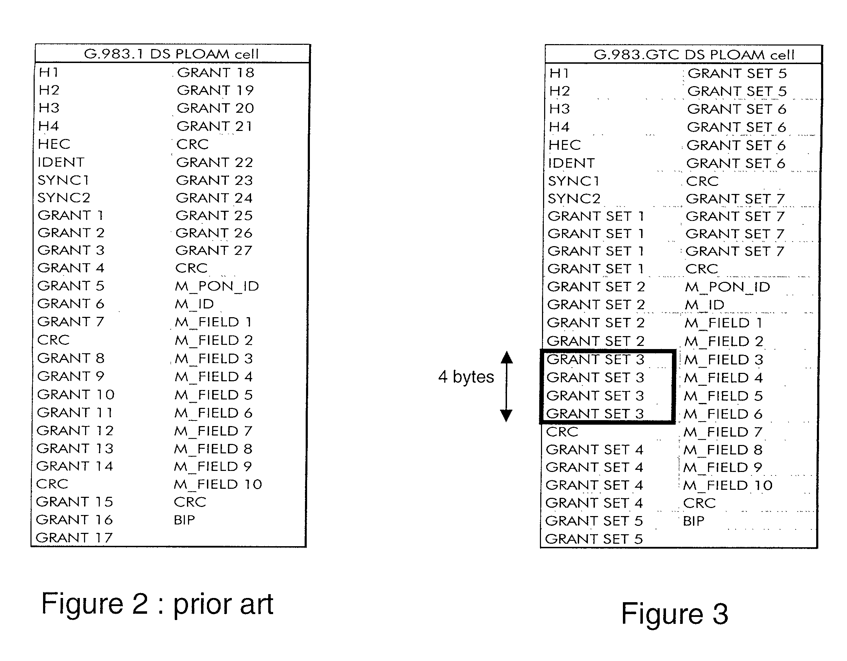

A known implementation of such a bitstream of grants is shown in Figure 2. Referring to figure 2, a downstream PLOAM cell according to the standard G.983.1 is shown. Herein, 27 bytes are predefined to include an 8-bit grant. Such an 8-Bit grant e.g. GRANT 5 comprises one queue identity of 8 bits. This queue identity uniquely identifies the storage queue and the associated service category that is allowed to provide a predetermined number of upstream data packets for a predetermined upstream timeslot. As it is described in the known standards, any value except some predetermined values can be used for these queue identities, as well as for the network terminal identities in order to identify either a network terminal or either a service category. Hereby a limited number of combinations i.e. 2⁸ = 256 whereof some reserved values not may be used, is reached.

The central station is hereby adapted to comprise in a grant a plurality of queue identities Q1, .., Qj, ..., Qm, i.e. according to the above mentioned article only 1 queue identity in one grant, each associated to a service category. This grant is comprised in a PLOAM cell such as shown in Figure 2.

Furthermore, it is to be remarked that since the downstream bit-stream of grants (G1, G2, G3, G4, G5, ...) now includes succeeding occurrences of queue identities (Q1, ..., Qi, ..., Qm) i.e. queue grants, each network terminal is adapted to determine from the downstream bit-stream of grants, the respective queue identities associated to the service categories which are included within this network terminal. To this purpose a second detector DET2 is included in each of these network terminals, denoted DET2 and only shown for network terminal ONUi in order not to overload the Figure 1. This second detector DET2 is adapted to receive the bitstream of grants, to extract therefrom the queue identities associated to the respective service categories, and, upon detection of such a queue identity, to generate a corresponding control signal towards the corresponding storage queue of the associated service category in the classifier CL. According to the prior art, detection of this queue identity and thereby the presence of this control signal is sufficient to allow this storage queue to upstream transmit a predetermined amount of packets towards the central station CS.

According to the present invention, a higher number of service categories are supported within the network terminals of the access network and a more efficient use of the available bits in downstream PLOAM cells is realized.

The central station is hereby adapted to define a network terminal identity NTi and to include the network terminal identity NTi in the same grant e.g. G3 together with the different queue identities. Furthermore the queue identities are defined by local identifiers, which only have a local meaning. This means that a combination of a queue identity with a network terminal identity is required in order to obtain a unique identification for a particular service category.

The network terminals e.g. ONUi are therefor adapted with a first detector DET1 which is coupled to the classifier CL. The first detector is enabled to detect in a bit-stream of grants its network terminal identity NTi. The first detector DET1 is further enabled to determine, upon detection of the identity NTi of its network terminal ONUi in a grant, an assignment of a predefined number N of consecutive upstream timeslots to its network terminal ONUi. These upstream timeslots are allowed to be used by the network terminal ONUi. The network terminal only has to find out from which service category the data packets are allowed to be transferred. Therefor the respective queue identities needs to be detected. As described above, to this purpose, is the second detector DET2 is comprised.

So, upon detection of its network terminal identity NTi, the network terminal ONUi and also one of the queue identities e.g. Qj in a received grant e.g. G3, the identification of a service category S1,..., Sj, ..., Sm within a network terminal is established. The classifier of the network terminal NTi is hereby allowed to transfer a predetermined amount of upstream data packets from the service queue of the respectively identified service category.

A preferred embodiment of the present invention will now be described in the following paragraph.

The content of a downstream PLOAM according to a preferred embodiment of the present invention is shown in Figure 3. Referring to Figure 3, a sequence of bytes is defined in a downstream PLOAM cell. In comparison with the prior art downstream PLOAM cell of Figure 2, a number of bytes are reserved in order to include a bitstream of grants G1, G2, G3, G4, G5, ... These bytes are also reserved in the PLOAM cell according to the present invention, at an identical place. However, one grant, called in Figure 3 a grant set comprises four times 8 bits. In this way e.g. grant set 3 is shown.

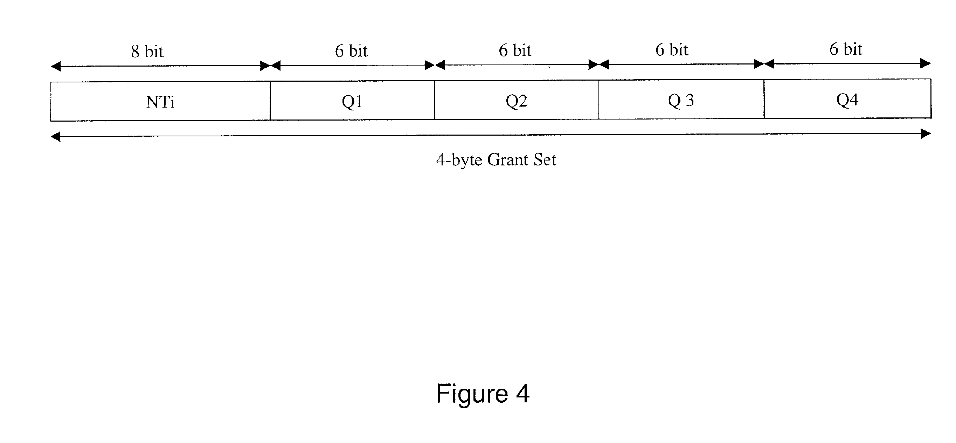

This four byte long grant set is also shown in Figure 4. Figure 4 shows the content of such a four-byte grant according to this preferred embodiment of the present invention. The shown grant set comprises besides a plurality of queue identities also a network terminal identity. Indeed, the first byte is used to comprise a network terminal identity e.g. NTi of the network terminal ONUi. Hereby a same network terminal identity structure i.e. 8 bits, is used as in the prior art PLOAM cells used in prior art access networks. The three following bytes are used to comprise the plurality of queue identities: four queue identities Q1, Q2, Q3 and Q4 of 6 bits are herein comprised. This structure of 6 bits is clearly different from the former prior art structure used for the queue identities i.e. 8 bits. Furthermore, the standardized ITU-T G.983.1 concept of downstream PLOAM grants does not change significantly with this new kind of grant set structure. Also, the same frame structure for the optical access network can be kept.

Hereafter, a principle working of the timeslot management according to this preferred embodiment of the present invention will be described.

The central station CS of the time division multiple access network generates a downstream PLOAM cell. Presume that, according to the installed dynamic bandwidth allocation of the medium access controller, a number of upstream timeslots is allowed to be used by some service categories of a particular network terminal ONUi. Hereby, the central station CS, comprises the network terminal identifier NTi of this network terminal ONUi in the first byte of a particular grant set e.g. grant set 3. Four queue identities of the service categories, which are authorised to the upstream bandwidth, are also included in the same grant set 3. Presume that, according to the present allocation method, service categories S1, S2, S3 and S4 are each authorised upon 1 upstream timeslots. The central station CS looks up in predefined tables the associated queue identities of S1, S2, S3 and S4 for this network terminal ONUi. It has to be remarked here that the respective network terminal with its network terminal identity NTi is indeed required in order to determine the queue identities in a unique way.

In this way Q1, Q2, Q3 and Q4, each including 6 bits, are determined and included in the 3 following bytes of the grant set 3. The grant set 3 is comprised in the PLOAM cell which is distributed into the access network.

Upon reception of the PLOAM cell by the network terminal ONUi, the first detector DET1, checks the first bytes of the predefined places for the different grant sets in the PLOAM cell. In grant set 3, network terminal ONUi detects its own identity NTi.

It has to be remarked that in order not to overload the processing of the network terminals, an efficient embodiment is realised by only starting the working of the second detector DET2 after reception of a control signal of the first detector DET1. In this way, the first detector DET1 provided this control signal as being a confirmation upon detection of its own identity in the first byte of a grant set. However, such an implementation is not an essential feature to the present invention.

Upon detection of its own identity NTi in grant set 3, the first detector DET generates and provides such a confirmation signal to the second detector DET2. Furthermore, the second detector DET2 also determines that the network terminal ONUi received an assignment from the central station CS of four predetermined upstream timeslots.

The second detector, detects the included queue identities within the three following bytes of the grant set and determines Q1, Q2, Q3 and Q4. The second detector DET2 provides the queue identities Q1, Q2, Q3 and Q4 to the classifier CL. Upon such a confirmation signal and upon recognition of a queue identity, a service category that is allowed to use an upstream timeslot is identified in a unique way. In this way, the classifier CL respectively, identifies service category S1, S2, S3 and S4. The classifier CL transfers a predetermined amount of upstream data packets of service category S1 in the first one of the four consecutive upstream timeslots. In the same way, the classifier transfers a predetermined amount of upstream data packets of service category S2, S3 and S4 in, respectively, the 2^{nd}, 3^{rd} and 4^{th} upstream timeslot.

Although the timeslot management method and central station and network terminal have been described for APON networks, they may as well be used for any network based on time division multiplexing, such as hybrid fiber coax networks, satellite networks and so on.

While the principles of the invention have been described above in connection with specific apparatus, it is to be clearly understood that this description is made only by way of example and not as a limitation on the scope of the invention, as defined in the appended claims.

## Claims

1. A timeslot management method for use in a time division multiple access network that comprises a central station (CS) coupled to each of a plurality of network terminals (ONU1, ..., ONUi, ..., ONUn) via the cascade connection of a common transmission link (L) and respective individual network terminal links (L1,...,Li,...,Ln), said management method includes the steps of : enabling said plurality of network terminals (ONU1, ..., ONUi, ..., ONUn) to transmit upstream data packets to said central station (CS) in a time multiplexed way over said common transmission link (L) using upstream time slots being assigned to said network terminals by means of distribution of a downstream bitstream of grants (G1, G2, G3, G4, G5, ...); and classifying within at least part of said plurality of network terminals (ONU1, ..., ONUi, ..., ONUn) said upstream data packets in accordance to associated service categories; and comprising in one (G3) of said grants, being intended for one of said network terminals (ONUi), a plurality of queue identities (Q1,...,Qj,..., Qm) each associated to a service category (S1, ..., Sj, ..., Sm) within said network terminal (ONUi) and **characterized in that** said timeslot management method further comprises defining a network terminal identity (NTi) being associated to said network terminal (ONU) and comprising said network terminal identity (NTi) in said grant (G3); and defining said plurality of queue identities (Q1, ..., Qj, ..., Qm) in said grant (G3) with local identifiers which only have a local meaning; and upon detection of said network terminal identity (NTi) and one (Qj) of said plurality of queue identities (Q1,...,Qi,..., Qm) in said grant (G3), whereby one (Sj) of said service categories is uniquely identified by a combination of said one of said plurality of queue identities (Q1,...,Qj,..., Qm) with said network terminal identity (NTi), transferring a predetermined amount of upstream data packets from said corresponding service category (Sj).

2. The timeslot management according to claim 1, **characterized in that** said timeslot management method further comprises defining in said grant (G3) a first field and a second field; and comprising by said central station (CS) said network terminal identity (NTi) in said first field and said plurality of queue identities (Q1,..., Qj,..., Qm) in said second field and thereby determining by said network terminal (ONUi), upon detection of its network terminal identity (NTi) in said first field, an assignment of a predefined number (N) of consecutive timeslots to said network terminal (ONUi); and furthermore transferring by said network terminal (ONUi), upon said detection of said one (Qj) of said plurality of queue identities (Q1,..., Qi,..., Qm) in said second field, said predetermined amount of upstream data packets from its corresponding service category (Sj) in one of said predefined number (N) of consecutive timeslots.

3. The timeslot management method according to any previous claim, **characterised in that** said time division multiple access network is an optical network and that said timeslot management method further comprises a step of comprising said downstream bitstream of grants (G1, G2, G3, G4, G5, ...) in downstream physical layer operation and maintenance cells (PLOAM).

4. The timeslot management method according to any previous claim, **characterised in that** said timeslot management method further comprises a step of defining said first field eight bits long and including in said second field four queue identities (Q1, Q2, Q3, Q4) of six bits long whereby said predefined number of consecutive upstream timeslots is equal to four.

5. A network terminal (ONUi) of a time division multiple access network wherein a central station (CS) is coupled to each of a plurality of network terminals (ONU1, ..., ONUi, ..., ONUn) comprising said network terminal (ONUi), via the cascade connection of a common transmission link (L) and respective individual network terminal links (L1,...,Li,...,Ln), said network terminals (ONU1, ..., ONUi, ..., ONUn) being adapted to transmit upstream data packets to said central station (CS) in a time multiplexed way over said common transmission link (L) using upstream time slots being assigned to said network terminals by means of distribution of a downstream bitstream of grants (G1, G2, G3, G4, G5, ...) said network terminal (ONUi) comprises classifying means (CL) to classify said upstream data packets in accordance to associated service categories; and said network terminal (ONUi) comprises second detection means (DET2), coupled to said classifying means (CL), to detect one (Qj) of a plurality of queue identities (Q1,...,Qi,..., Qm) being comprised in one (G3) of said grants intended for said network terminal (ONUi) and each being associated to a service category (S1, ..., Sj, ..., Sm) within said network terminal (ONUi), **characterized in that** said plurality of queue identities (Q1, ..., Qj, ..., Qm) in said grant (G3) being defined by means of local identifiers having only a local meaning and that said network terminal (ONUi) further comprises first detection means (DET1), coupled to said classifying means (CL), in order to detect a network terminal identity (NTi) in said one grant (G3), said network terminal identity (NTi) being defined and associated to said network terminal (ONU) and being comprised by said central station (CS) in said grant (G3), and that said classifying means (CL) is further comprised to transfer, upon detection of said network terminal identity (NTi) and one (Qj) of said plurality of queue identities (Q1,...,Qi,..., Qm) in said grant (G3), whereby one (Sj) of said service categories is uniquely identified by a combination of said one of said plurality of queue identities (Q1,...,Qj,..., Qm) with said network terminal identity (NTi), a predetermined amount of upstream data packets from said corresponding service category (Sj).

6. The network terminal (ONUi) according to claim 5, **characterized in that** said first detection means (DET1) is further comprised to determine, upon detection of its network terminal identity (NTi) in a first field of said grant (G3), an assignment of a predefined number (N) of consecutive timeslots to said network terminal (ONUi); and that said second detection means (DET2) is further enabled to detect one (Qj) of a plurality of queue identities (Q1,...,Qj,..., Qm) in a second field of said grant (G3),; and that said classifying means (CL) is further enabled to transfer, said predetermined amount of upstream data packets from its corresponding service category (Sj) in one of said predefined number (N) of consecutive timeslots, said network terminal identity (NTi) and said plurality of queue identities (Q1,..., Qj,..., Qm) being comprised by said central station (CS) in, respectively, said first field and said second field of said grant (G3).

7. A central station (CS) of a time division multiple access network that comprises said central station (CS) and each of a plurality of network terminals (ONU1, ..., ONUi, ..., ONUn) being coupled thereto via the cascade connection of a common transmission link (L) and respective individual network terminal links (L1,...,Li,...,Ln) said central station (CS) being adapted to distribute a downstream bitstream of grants (G1, G2, G3, G4, G5, ...) in order to assign upstream time slots to said plurality of network terminals (ONU1, ..., ONUi, ..., ONUn) and in order to allow thereby said plurality of network terminals (ONU1, ..., ONUi, ..., ONUn) to transmit upstream data packets to said central station (CS) in a time multiplexed way over said common transmission link (L) by using said upstream time slots, said central station (CS) is enabled to comprise in one (G3) of said grants, being intended for one of said network terminals (ONUi), a plurality of queue identities (Q1,...,Qi,..., Qm) each associated to a service category (S1, ..., Sj, ..., Sm) within said network terminal (ONUi), **characterized in that** said central station (CS) is further enabled to define a network terminal identity (NTi) being associated to said network terminal (ONU) and to comprise said network terminal identity also in said grant (G3), in order to enable thereby said network terminal (ONUi) to transfer, upon detection of said network terminal identity (NTi) and one (Qj) of said plurality of queue identities (Q1,...,Qj,..., Qm) in said grant (G3), whereby one (Sj) of said service categories is uniquely identified by a combination of said one of said plurality of queue identities (Q1,...,Qj,..., Qm) with said network terminal identity (NTi), a predetermined amount of upstream data packets from said corresponding service category (Sj), said upstream data packets being classified, within at least part of said plurality of network terminals (ONU1, ..., ONUi, ..., ONUn) in accordance to said service categories, and said plurality of queue identities (Q1, ..., Qj, ..., Qm) in said grant (G3) being defined with local identifiers which only have a local meaning.

8. The central station (CS) according to claim 7, **characterised in that** said central station (CS) is further enabled to determine in said grant (G3) a first field and a second field; and to comprise said network terminal identity (NTi) in said first field and said plurality of queue identities (Q1,..., Qj,..., Qm) in said second field and to thereby allow said network terminal (ONUi) to determine, upon detection of its network terminal identity (NTi) in said first field, an assignment of a predefined number (N) of consecutive timeslots to said network terminal (ONUi) and furthermore to transfer by said network terminal (ONUi), upon detection of one (Qj) of said plurality of queue identities (Q1,..., Qj,..., Qm) in said second field said predetermined amount of upstream data packets from its corresponding service category (Sj) in one of said predefined number (N) of consecutive timeslots.

9. A time division multiple access network, **characterised in that** said access network comprises at least any one of said network terminal (ONUi) according to anyone of claim 5 and claim 6, and said central station (CS) according to anyone of claim 7 and claim 8.
